# FASCICULE DE BREVET EUROPEEN

(11) **EP 2 548 804 B1**
(45) Date de publication et mention de la délivrance du brevet: **12.03.2014**
(21) Numéro de dépôt: 12175921.1
(22) Date de dépôt: 11.07.2012
(51) Int. Cl.: B64D 29/00, B64D 33/04, F02K 1/09, F02K 1/12

(54) **Nacelle pour ensemble propulsif à tuyère à section variable**
Gondel für eine Antriebseinheit mit einer Düse mit variablem Querschnitt
Nacelle for propulsion assembly with variable ejector nozzle

(30) Priorité: 22.07.2011 FR 1156690
(43) Date de publication de la demande: 23.01.2013
(73) Titulaire: Airbus Operations S.A.S., 31060 Toulouse (FR)
(72) Inventeur: Bulin, Guillaume, 31700 Blagnac (FR); Oberle, Patrick, 82600 Verdun sur Garonne (FR); Devienne, Nicolas, 31000 Toulouse (FR)
(74) Mandataire: Gicquel, Olivier Yves Gérard

(56) Documents cités:
- EP-A2- 0 848 152
- FR-A1- 2 146 109
- FR-A1- 2 736 390
- US-A- 3 797 785
- US-A1- 2011 120 078

## Description

La présente invention relève du domaine des systèmes de propulsion pour aéronefs. Elle vise plus particulièrement un ensemble propulsif à tuyère à section variable.

### Préambule et art antérieur

La présente invention concerne les avions à turboréacteurs double flux possédant des soufflantes de préférence à bas taux de compression (typiquement inférieur à 1,4).

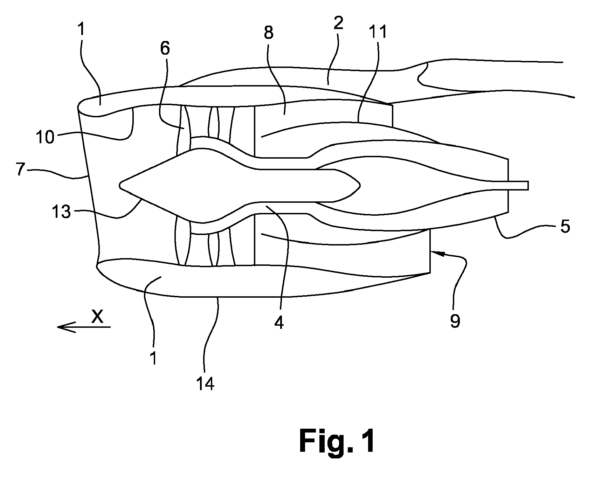

Un tel groupe propulseur, de type turboréacteur à double flux, est illustré en vue en coupe sur la figure 1, dans une disposition conforme à l'art antérieur.

Un groupe propulseur à double flux comprend une nacelle 1, mécaniquement suspendue à la structure d'un aéronef par un mat 2 qui se prolonge à l'intérieur de la nacelle 1 pour porter un turboréacteur 3.

De façon très simplifiée, le turboréacteur 3 aspire de l'air extérieur au niveau d'une entrée d'air 7 par l'intermédiaire d'une hélice carénée dite soufflante 6 dotée d'un cône d'entrée 13. Cette soufflante 6 est entraînée en rotation avec les autres étages d'un compresseur par une turbine (non représentée).

L'air injecté par le turboréacteur 3 est séparé en deux parties : d'une part un flux primaire circulant dans une veine primaire 4, dont l'air sert à la combustion d'un carburant dans une chambre de combustion, et dont les gaz de combustion, fortement accélérés, sont éjectés vers l'arrière du turboréacteur 3 par une zone d'échappement 5. D'autre part, le reste du flux d'air (la majeure partie en fait) aspiré et accéléré par la soufflante 6, est canalisé par une veine secondaire 8 vers une tuyère 9.

Le taux de compression de la soufflante 6 est défini comme le rapport entre la pression de l'air au niveau de la tuyère 9 et la pression de l'air au niveau de l'entrée d'air 7.

Les différents éléments cités plus haut, formant le turboréacteur à double flux 3 sont supposés connus en soi de l'homme de l'art, et ne sont donc pas décrits plus avant ici.

Intégré à une nacelle 1, une tuyère à section variable (dite également VAFN de "Variable Area Fan Nozzle") est un dispositif de décharge d'air du flux secondaire du turboréacteur 3 à travers cette nacelle 1, permettant ainsi un ajustement du point de fonctionnement de la soufflante 6, en accord avec une amélioration des performances du moteur.

En effet, la poussée générée par la tuyère 9 varie en fonction des conditions extérieures, du régime moteur et du rapport des surfaces entrée-sortie. Il est alors ainsi possible d'optimiser le régime moteur et donc la consommation en adaptant la surface de sortie de la tuyère. En faisant varier la surface de la tuyère 9 en aval de la soufflante 6, il est possible d'obtenir une meilleure stabilité de fonctionnement du groupe propulseur tout en optimisant la consommation de carburant et le niveau de bruit du moteur.

Cette capacité d'adaptation du moteur entre les différents régimes comme le décollage, l'atterrissage et la croisière, a suscité l'invention de systèmes et d'architectures différents.

Il existe historiquement deux catégories principales de tuyère à section variable, également dits dispositif de décharge d'air, pour turboréacteur d'avion à double flux, ayant fait l'objet d'études et de demandes de brevets :
- une première catégorie regroupant les dispositifs qui mettent en oeuvre une translation, selon l'axe du turboréacteur, d'un élément annulaire de nacelle tel qu'un capot d'inverseur de poussée, pour découvrir ou recouvrir une ouverture prenant habituellement la forme d'une portion d'anneau. Un tel dispositif est par exemple décrit dans la demande de brevet « Thrust Modulating Apparatus » US 3797785 A1 (Rohr Industries, inc 1973) ou EP0848152, le dernier divulguant deux parties mobiles.
- une seconde catégorie regroupant les dispositifs qui comprennent au moins un élément pivotant (également dit porte pivotante) entre une position d'ouverture et une position d'obturation d'un orifice ménagé dans la nacelle du turboréacteur. Un tel dispositif est décrit dans la demande de brevet FR2736390 (Hispano Suiza).

D'une manière générale, les dispositifs de la première catégorie présentent de nombreux inconvénients. La puissance nécessaire à leur activation est ainsi relativement élevée. Il est enfin difficile d'assurer l'étanchéité entre les pièces mobiles de ces dispositifs.

Les dispositifs connus de la seconde catégorie précitée présentent également un certain nombre d'inconvénients. Ainsi, la Demande de Brevet FR 2.146.109 datant de 1973, décrit un turboréacteur d'avion à double flux comprenant une rangée annulaire de dispositifs de décharge d'air. Chacun comprend deux clapets pivotants obturant respectivement l'ouverture interne et l'ouverture externe d'un orifice traversant la nacelle du turboréacteur.

Les deux clapets pivotants de chaque dispositif sont articulés à la nacelle au niveau de l'un de leurs bords amont et aval, de manière à pouvoir s'ouvrir par pivotement dans des sens opposés : soit totalement, pour remplir la fonction d'inverseur de poussée, soit partiellement, pour remplir la fonction de dispositif de décharge d'air.

La double fonction d'inverseur de poussée et de dispositif de décharge d'air, ainsi que l'indépendance des deux clapets pivotants, requiert l'utilisation de moyens d'actionnement qui soient nombreux et puissants, tels que des vérins électriques. Cela pénalise à la fois le coût et la masse de ces dispositifs. Cela laisse également peu de place pour d'éventuelles garnitures d'insonorisation qui sont pourtant nécessaires à la réduction des nuisances sonores émises par les turboréacteurs.

### Exposé de l'invention

L'invention vise un dispositif de tuyère à section variable discrète et à fonctionnement asymétrique.

Plus précisément, l'invention vise un ensemble propulsif à tuyère à section variable, l'ensemble propulsif comprenant une nacelle, hébergeant un turboréacteur, de type double flux comprenant une hélice carénée dite soufflante, le flux secondaire, aspiré et accéléré par la soufflante, étant canalisé par une veine secondaire, ménagée dans la nacelle entre la surface interne de ladite nacelle et la surface externe du turboréacteur, vers une tuyère,
la nacelle comporte également :
- une partie fixe, portée par une demi-nacelle définie par un plan de symétrie vertical de la nacelle, et
- une partie mobile portée par l'autre demi-nacelle, ladite partie mobile contenant ou libérant une partie du flux secondaire, suivant sa position, ouverte ou fermée, ladite partie mobile pouvant prendre seulement un nombre discret de positions, supérieur ou égal à trois positions, déterminant notamment une position fermée, une position complètement ouverte, et une ou plusieurs positions intermédiaires dites semi-ouvertes, la forme de la partie mobile étant adaptée à ce que sa section efficace de sortie, est inférieure à celle de la demi-nacelle fixe, lorsque la partie mobile est fermé, à ce que sa section efficace de sortie, est sensiblement égale à celle de la demi-nacelle fixe, lorsque la partie mobile est semi-ouverte, et est supérieure lorsque la partie mobile est complètement ouverte.

Selon un premier mode de réalisation, la partie mobile est un capot déployable disposé au sein de la veine secondaire, en partie arrière de celle-ci, sensiblement au regard de la tuyère, ledit capot déployable étant mobile en translation parallèlement à l'axe longitudinal X du turboréacteur, la nacelle comportant une ouverture en partie arrière, de telle sorte que le capot déployable est adapté à recouvrir cette ouverture.

Avantageusement, dans ce cas, le capot déployable est un élément en forme de segment annulaire de nacelle.

Encore plus précisément, le capot déployable vient se confondre avec la surface interne de la veine secondaire, dans sa position fermée, et constitue une extension de cette surface vers l'arrière dans sa position ouverte.

Dans un autre mode de réalisation, la partie mobile est un élément pivotant, disposé à la surface externe de la veine secondaire, en partie arrière de celle-ci, la nacelle comportant une ouverture traversante ménagée dans la nacelle du turboréacteur, de telle sorte que l'élément pivotant est adapté, selon sa position ouverte ou fermée, à découvrir ou recouvrir l'ouverture.

Le but est d'assurer la fonction d'adaptation de la poussée de l'ensemble propulsif en fonction de l'altitude, de manière performante, simple, fiable, légère et econome en energie.

Dans la présente invention, on utilise une tuyère à section variable (VAFN) présentant une asymétrie.

L'invention vise également un aéronef comportant une nacelle tel qu'exposé.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 : un turboréacteur à double flux de type classique, en vue en coupe longitudinale
Figure 2 : un schéma de principe de fonctionnement asymétrique avec deux capots fermés (position 1), ce schéma n'étant pas couvert par les revendications.
Figure 3 : un schéma de principe de fonctionnement asymétrique avec deux capots ouverts (position 2), ce schéma n'étant pas couvert par les revendications.
Figure 4 : un schéma de principe de fonctionnement asymétrique avec un capot ouvert et un capot fermé (position 3), ce schéma n'étant pas couvert par les revendications.
Figure 5 : un schéma de principe dans une première variante, selon l'invention, avec un capot fixe et un capot fermé,
Figure 6 : un schéma de principe dans la première variante, selon l'invention, avec un capot fixe et un capot en position intermédiaire,
Figure 7 : un schéma de principe dans la première variante selon l'invention, avec un capot fixe et un capot ouvert,
Figure 8 : un schéma de principe dans une seconde variante avec deux portes pivotantes fermées, ce schéma n'étant pas couvert par les revendications.
Figure 9 : un schéma de principe dans une seconde variante avec une porte pivotante ouverte et une porte pivotante fermée, ce schéma n'étant pas couvert par les revendications.
Figure 10 : un schéma de principe dans une seconde variante avec deux portes pivotantes ouvertes, ce schéma n'étant pas couvert par les revendications.
Figure 11 : un schéma de principe dans une troisième variante avec fonctionnement à quatre positions par capots en translation, ce schéma n'étant pas couvert par les revendications.
Figure 12 : un schéma de principe dans une troisième variante avec fonctionnement à quatre positions par portes pivotantes, ce schéma n'étant pas couvert par les revendications.

### Description détaillée d'un mode de réalisation de l'invention

L'invention se place au sein d'un groupe propulseur, de type turboréacteur à double flux, tel qu'illustré en vue en coupe sur la figure 1, déjà décrite plus haut.

Le dispositif non couvert par les revendications comporte deux parties indépendantes appelées capots déployables 20, 21 (« cowls » en anglais) disposés de part et d'autre d'un plan de symétrie vertical du groupe propulsif. Chacun de ces capots déployables 20, 21 est disposé au sein de la veine secondaire 8, en partie arrière de celle-ci, sensiblement au regard de la tuyère 9. Chaque capot déployable vient se confondre avec la surface interne 10 de la veine secondaire 8, dans une première position dite fermée, et constitue une extension de cette surface vers l'arrière dans une seconde position dite ouverte.

Pour un turboréacteur ayant une poussée de 30000 Ibf (livre-force) et un taux de dilution (by-pass ratio) de 10 :1, un tel capot déployable 20, 21 prend la forme d'un demi anneau d'environ 2 mètres de diamètre, de longueur environ 40 centimètre avec une épaisseur relative de 5 à 15%.

Le dispositif comporte par ailleurs des moyens (non illustrés) de mouvoir indépendamment ces capots déployables 20, 21 en translation par rapport à la structure de la tuyère 5. Par exemple une course de 15 à 30 centimètres aura pour conséquence une variation de la section efficace de sortie du flux secondaire de 10 à 30%.

Chaque capot déployable 20, 21 peut occuper deux positions, l'une dite « fermée » et l'autre dite « ouverte ». Suivant leur position, ouverte ou fermée, les capots déployables 20, 21 contiennent ou libèrent une partie du flux secondaire en faisant varier la section de sortie de la tuyère 9.

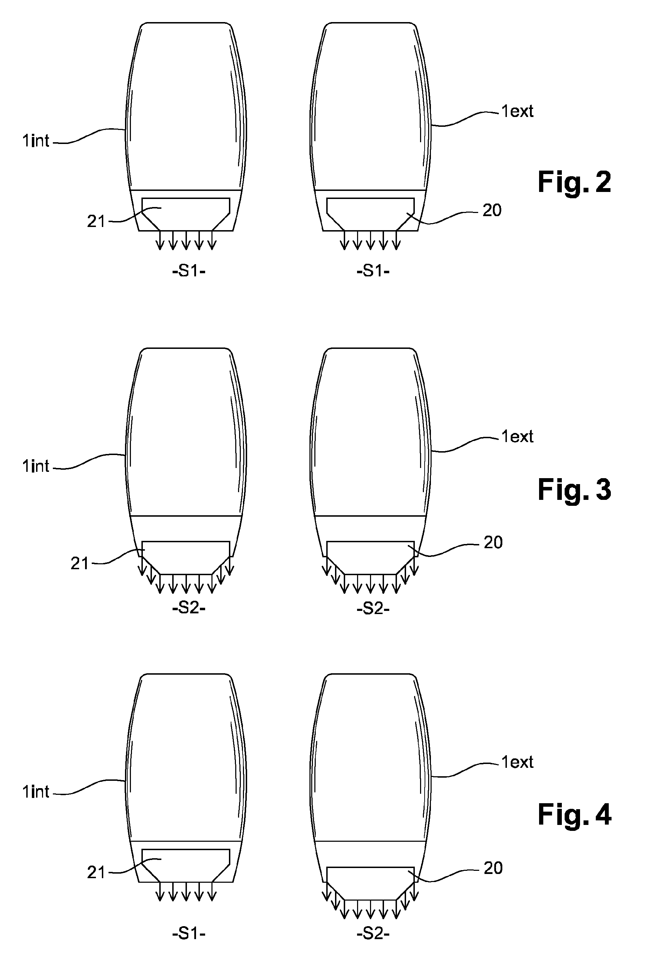

Il n'y a pas de position intermédiaire possible, ce qui participe à la simplicité mécanique du dispositif de variation de surface de la tuyère. Si on considère que les capots déployables 20, 21 couvrent la même surface en regard du flux secondaire, alors la section de sortie correspondante de la tuyère 9 prendra trois valeurs, dans les cas suivants :
- Position 1: Les deux capots déployables sont fermés (Figure 2)
- Position 2: Les deux capots déployables sont ouverts (Figure 3
- Position 3: Un capot déployable est fermé, l'autre ouvert (Figure 4)

Comme on l'a vu plus haut, la poussée générée par la tuyère 9 varie en fonction des conditions extérieures, du régime moteur et du rapport des surfaces entrée-sortie. Il est donc possible d'optimiser le régime moteur et la consommation en adaptant la surface de sortie de la tuyère 9.

En position rétractée avec les deux capots déployables 20, 21 fermés, la tuyère 9 offre une surface de sortie S1+S1 (Figure 2).

En position déployée avec les deux capots déployables 20, 21 ouverts, la tuyère 9 offre une surface de sortie S2+S2 (Figure 3).

Enfin, en position intermédiaire avec un premier capot déployable 20 ouvert et un second capot déployable 21 fermé, la tuyère 9 offre une surface de sortie S1+S2 (Figure 4).

Les figures 2 à 4 illustrent les différentes configurations offertes par le fonctionnement asymétrique de la tuyère 9 à section variable discrète sur une nacelle 1 (représentée par deux demi-nacelles : intérieure 1 int et extérieure 1 ext.

### Mode de fonctionnement

Sur un avion commercial biréacteur, le fonctionnement est le suivant :
- Cas de fonctionnement normal
   - En vol en croisière, les deux capots déployables 20, 21 de chaque nacelle sont fermés, ce qui correspond aux conditions aérodynamiques optimales à la vitesse et à l'altitude considérées (Position 1).
   - Au décollage, les deux capots déployables 20, 21 de chaque nacelle sont en position ouverte et déchargent une partie du flux secondaire à l'arrière de la tuyère 9 (Position 2).
   - En montée ou en descente, le capot déployable 20, disposé le plus vers l'extérieur de l'avion est ouvert (sur la demi-nacelle 1 ext), et l'autre fermé (position 3).
- Cas de panne
   - Si un capot déployable reste ouvert en cas de panne pendant la croisière, des moyens de pilotage (pilote ou pilote automatique) compensent la dissymétrie de poussée avec les commandes de vol.
   - Si un capot déployable extérieur reste fermé au décollage ou à l'atterrissage, les autres capots déployables, y compris ceux de l'autre moteur (cas d'un avion biréacteur) sont maintenus en position fermée afin de rétablir la symétrie de poussée.

### Avantages

Un système à fonctionnement discret asymétrique présente l'avantage de s'affranchir d'un système d'asservissement en position des capots et d'assurer trois niveaux de poussée pour chaque nacelle.

Cela permet de simplifier la commande des actionneurs et d'accommoder intrinsèquement un cas de panne de l'un des 2 capots déployables (l'autre restant disponible). Ceci permet donc de gagner en fiabilité et en sécurité par rapport à des systèmes de tuyère à section variable continus asservis en position ou discrets et symétriques.

### Variantes

En exploitant le concept de positionnement discret avec un fonctionnement asymétrique, plusieurs variantes remplissant les mêmes critères de fonctionnalité, de simplicité et de robustesse sont réalisables.

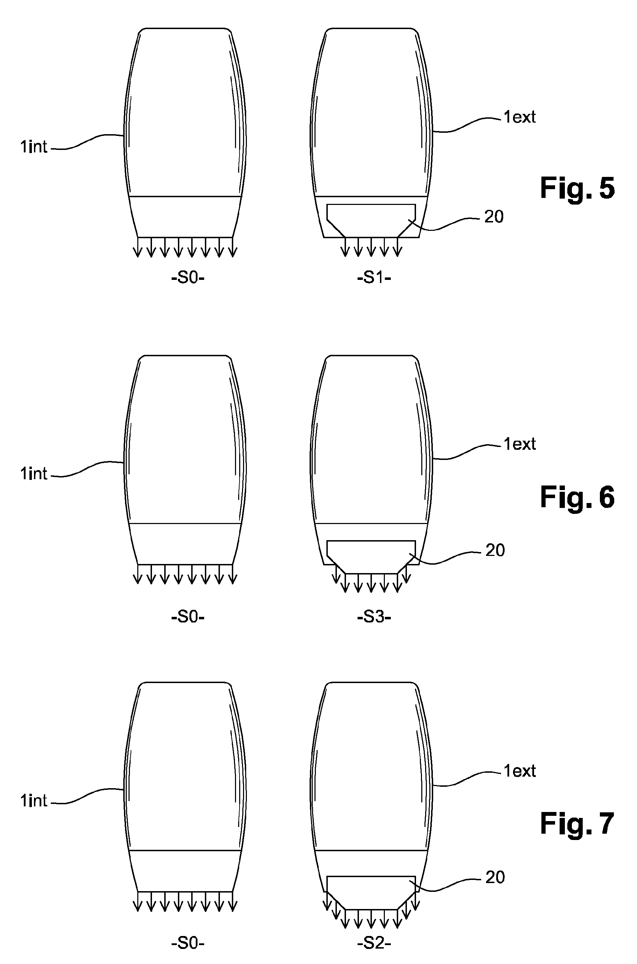

Suivant l'architecture considérée « par capots en translation » (décrite plus haut), « par une partie fixe et une partie en translation » ou par « portes pivotantes », on obtient plusieurs concepts. Ces concepts sont schématisés dans les figures 5 à 12.

Variante 1 selon l'invention : un capot fixe, portée par la demi-nacelle intérieure 1int, et un capot déployable 20, mobile en translation selon trois positions, porté par la demi-nacelle extérieure 1ext.

Cette variante est illustrée par les figures 5 à 7.

Dans cette variante, la section efficace de sortie de la demi-nacelle extérieure 1ext, est inférieure à celle de la demi-nacelle intérieure 1int, lorsque le capot déployable 20 est fermé (figure 5).

La section efficace de sortie de la demi-nacelle extérieure 1ext, est sensiblement égale à celle de la demi-nacelle intérieure 1int, lorsque le capot déployable 20 est semi-ouvert (figure 6), et supérieure lorsque le capot déployable 20 est complètement ouvert (figure 7)

Variante 2 non couverte par les revendications : les deux demi-nacelles 1 int, 1 ext comportent des portes pivotantes 22int, 22ext indépendantes.

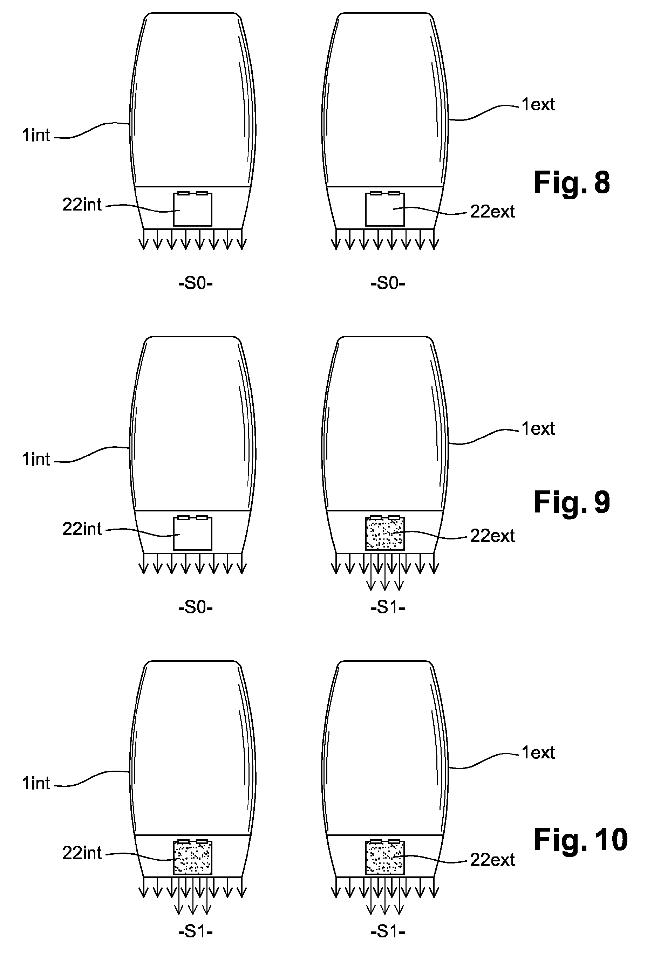

Cette variante est illustrée par les figures 8 à 10.

Ces portes pivotantes 22int, 22ext sont du type décrit en préambule de la présente demande.

Ici encore, la section efficace de sortie générée par la nacelle varie entre trois valeurs, selon que les portes pivotantes sont toutes deux fermées (figure 8), porte pivotante intérieure ouverte et porte pivotante fermée (figure 9), ou deux portes pivotantes ouvertes (figure 10). La section efficace de sortie est maximale lorsque les deux portes pivotantes sont ouvertes.

Variante 3 non couverte par les revendications : fonctionnement à quatre positions

Sous-variante 1 non couverte par les revendications : chaque nacelle 1 porte deux capots déployables mobiles en translation de tailles différentes. Dans le présent exemple nullement limitatif, le capot déployable intérieur 23int de la demi-nacelle intérieure 1int est de taille inférieure au capot déployable extérieur 23ext de la demi-nacelle extérieure 1 ext.

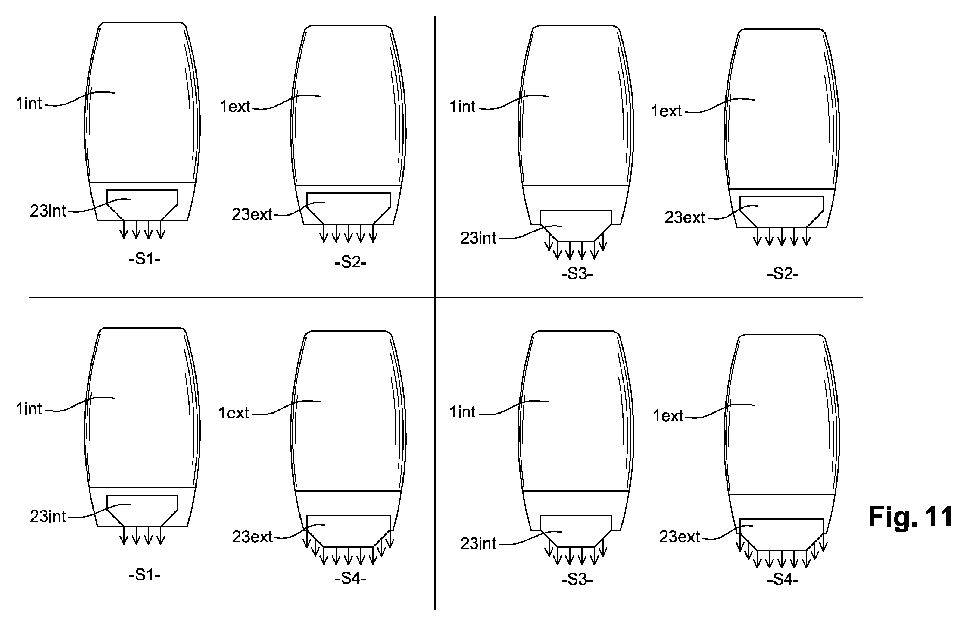

Cette variante est illustrée par la figure 11.

### • Fonctionnement en vol

Dans cette variante, les deux capots déployables 23int, 23ext de chaque nacelle ne recouvrent pas la même surface sur chaque demi-nacelle 1int, 1ext respectivement, offrant ainsi quatre combinaisons différentes. Ce fonctionnement a la même simplicité au niveau du pilotage et du contrôle que la solution à trois positions et permet d'optimiser le régime moteur dans un cas de vol supplémentaire (par exemple vol stabilisé en attente à basse altitude).
- Régime 1 : Surface de sortie tuyère = S1 + S2 (figure 11 en haut à gauche)
- Régime 2 : Surface de sortie tuyère = S2 + S3 (figure 11 en haut à droite)
- Régime 3 : Surface de sortie tuyère = S1 + S4 (figure 11 en bas à gauche)
- Régime 4 : Surface de sortie tuyère = S3 + S4 (figure 11 en bas à droite)

Sous-variante 2 non couverte par les revendications : chaque nacelle 1 porte deux portes pivotantes de tailles différentes. Dans le présent exemple nullement limitatif, la porte pivotante intérieure 24int de la demi-nacelle intérieure 1int est de taille inférieure à la porte pivotante extérieure 24ext de la demi-nacelle extérieure 1ext.

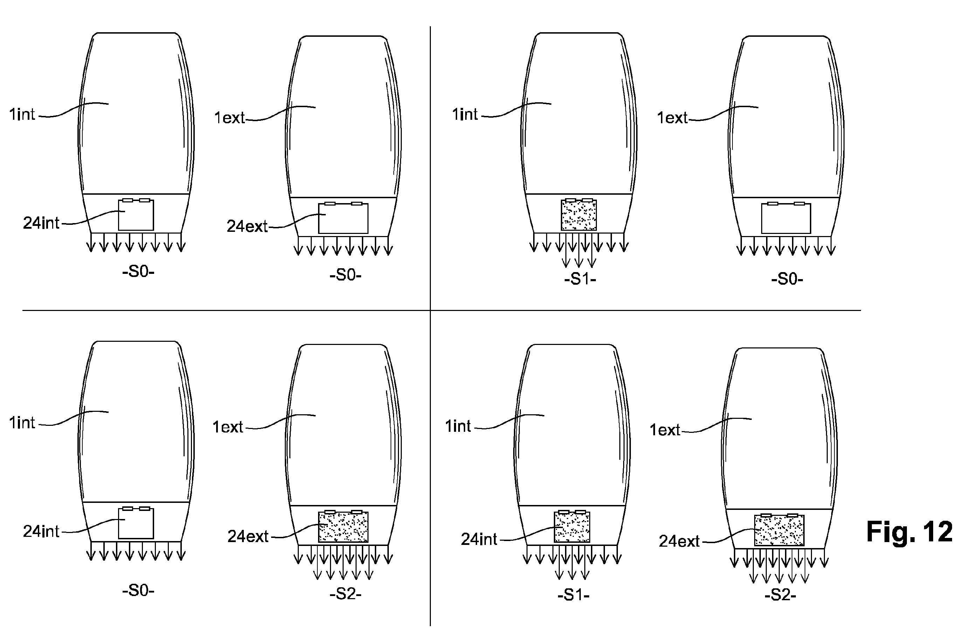

Cette variante est illustrée par la figure 12.

### • Fonctionnement en vol

De même que précédemment, on peut optimiser 4 régimes moteurs :
- Régime 1 : Surface de sortie tuyère = S0 + S0 (figure 12 en haut à gauche)
- Régime 2 : Surface de sortie tuyère = S1 + S0 (figure 12 en haut à droite)
- Régime 3 : Surface de sortie tuyère = S0 + S2 (figure 12 en bas à gauche)
- Régime 4 : Surface de sortie tuyère = S1 + S2 (figure 12 en bas à droite)

Variante 4 non couverte par les revendications : une partie fixe et une partie mobile continue (variante non illustrée)

Une autre variante consiste à ce qu'une demi-nacelle comprenne un capot fixe, et à ce que l'autre demi-nacelle comprenne un capot déployable mobile en translation de façon pilotable en continu, et non plus seulement selon un nombre de positions discret.

Cette solution est un compromis entre le positionnement discret et continu mais toujours en fonctionnement asymétrique. Ceci présente certains avantages de simplicité de contrôle et de conception en asservissement continu.

Dans une autre variante non couverte par les revendications, chaque nacelle porte deux portes pivotantes de tailles différentes, la porte pivotante intérieure de la demi-nacelle intérieure est de taille supérieure à la porte pivotante extérieure de la demi-nacelle extérieure. Le principe de fonctionnement est alors identique.

## Revendications

1. Ensemble propulsif à tuyère à section variable comprenant une nacelle (1), hébergeant un turboréacteur (3), de type double flux comprenant une hélice carénée dite soufflante (6), le flux secondaire, aspiré et accéléré par la soufflante (6), étant canalisé par une veine secondaire (8), ménagée dans la nacelle (1) entre la surface interne de ladite nacelle (1) et la surface externe du turboréacteur (3), vers une tuyère (9),
**caractérisée en ce que** la nacelle comporte également :
- une partie fixe, portée par une demi-nacelle (1int) définie par un plan de symétrie vertical de la nacelle, et
- une partie mobile (20) portée par l'autre demi-nacelle (1ext), ladite partie mobile contenant ou libérant une partie du flux secondaire, suivant sa position, ouverte ou fermée, ladite partie mobile pouvant prendre seulement un nombre discret de positions, supérieur ou égal à trois positions, déterminant notamment une position fermée, une position complètement ouverte, et une ou plusieurs positions intermédiaires dites semi-ouvertes, la forme de la partie mobile étant adaptée à ce que sa section efficace de sortie est inférieure à celle de la demi-nacelle fixe (1int), lorsque la partie mobile (20) est fermé,
sa section efficace de sortie, est sensiblement égale à celle de la demi-nacelle fixe (1int), lorsque la partie mobile (20) est semi-ouverte, et
est supérieure lorsque la partie mobile (20) est complètement ouverte.

2. Ensemble propulsif selon la revendication 1, dans lequel la partie mobile est un capot déployable disposés au sein de la veine secondaire (8), en partie arrière de celle-ci, sensiblement au regard de la tuyère (9), ledit capot déployable étant mobile en translation parallèlement à l'axe longitudinal X du turboréacteur (3), la nacelle comportant des ouvertures en partie arrière, de telle sorte que ces capots déployable est adapté à découvrir ou recouvrir ces ouvertures.

3. Ensemble propulsif selon la revendication 2, dans lequel le capot déployable est un élément en forme de segment annulaire de nacelle.

4. Ensemble propulsif selon l'une quelconque des revendications 2 à 3, dans lequel le capot déployable vient se confondre avec la surface interne (10) de la veine secondaire (8), dans sa position fermée, et constitue une extension de cette surface vers l'arrière dans sa position ouverte.

5. Ensemble propulsif selon la revendication 1, dans lequel la partie mobile est un élément pivotant, disposé à la surface externe de la veine secondaire (8), en partie arrière de celle-ci, la nacelle comportant des ouvertures traversantes ménagées dans la nacelle du turboréacteur, de telle sorte que cet élément pivotant est adapté, selon sa position ouverte ou fermée, à découvrir ou recouvrir ces ouvertures.

6. Aéronef, **caractérisé en ce qu'**il comporte un ensemble propulsif selon l'une quelconque des revendications 1 à 5.

## Patentansprüche

1. Antriebseinheit mit einer Düse mit variablem Querschnitt, die eine Gondel (1) enthält, in der ein Turbotriebwerk (3) von der Art Zweistromtriebwerk untergebracht ist, das einen Gebläse (6) genannten Düsenpropeller enthält, wobei der vom Gebläse (6) angesaugte und beschleunigte Sekundärstrom durch einen in der Gondel (1) zwischen der Innenfläche der Gondel (1) und der Außenfläche des Turbotriebwerks (3) ausgebildeten Sekundärkanal (8) zu einer Düse (9) kanalisiert wird,
**dadurch gekennzeichnet, dass** die Gondel ebenfalls aufweist:
- einen ortsfesten Teil, der von einer Halbgondel (lint) getragen wird, die von einer senkrechten Symmetrieebene der Gondel definiert wird, und
- einen beweglichen Teil (20), der von der anderen Halbgondel (lext) getragen wird, wobei der bewegliche Teil einen Teil des Sekundärstroms enthält oder freisetzt, je nach seiner Stellung, offen oder geschlossen, wobei der bewegliche Teil nur eine diskrete Anzahl von Stellungen einnehmen kann, größer als oder gleich drei Stellungen, wodurch insbesondere eine geschlossene Stellung, eine ganz geöffnete Stellung und eine oder mehrere so genannte halboffene Zwischenstellungen festgelegt werden, wobei die Form des beweglichen Teils so angepasst ist, dass
sein Ausgangswirkungsquerschnitt kleiner als derjenige der ortsfesten Halbgondel (lint) ist, wenn der bewegliche Teil (20) geschlossen ist, sein Ausgangswirkungsquerschnitt im Wesentlichen gleich demjenigen der ortsfesten Halbgondel (lint) ist, wenn der bewegliche Teil (20) halboffen ist, und
größer ist, wenn der bewegliche Teil (20) vollständig geöffnet ist.

2. Antriebseinheit nach Anspruch 1, wobei der bewegliche Teil eine aufklappbare Haube ist, die im Sekundärkanal (8) in dessen hinterem Bereich im Wesentlichen gegenüber der Düse (9) angeordnet ist, wobei die aufklappbare Haube parallel zur Längsachse X des Turbotriebwerks (3) translationsbeweglich ist, wobei die Gondel im hinteren Bereich Öffnungen aufweist, so dass diese aufklappbare Haube geeignet ist, diese Öffnungen offen zu legen oder zuzudecken.

3. Antriebseinheit nach Anspruch 2, wobei die aufklappbare Haube ein Element in Form eines ringförmigen Gondelsegments ist.

4. Antriebseinheit nach einem der Ansprüche 2 bis 3, wobei die aufklappbare Haube in ihrer geschlossenen Stellung mit der Innenfläche (10) des Sekundärkanals (8) zusammenfällt und in ihrer offenen Stellung eine Verlängerung dieser Fläche nach hinten bildet.

5. Antriebseinheit nach Anspruch 1, wobei der bewegliche Teil ein schwenkbares Element ist, das an der Außenfläche des Sekundärkanals (8) in dessen hinterem Bereich angeordnet ist, wobei die Gondel Durchgangsöffnungen aufweist, die in der Gondel des Turbotriebwerks so ausgebildet sind, dass dieses schwenkbare Element je nach seiner offenen oder geschlossenen Stellung geeignet ist, um diese Öffnungen offen zu legen oder zuzudecken.

6. Luftfahrzeug, **dadurch gekennzeichnet, dass** es eine Antriebseinheit nach einem der Ansprüche 1 bis 5 aufweist.

## Claims

1. Power plant with a variable-area fan nozzle comprising a nacelle (1) accommodating a bypass turbojet engine (3) incorporating a ducted fan (6), the secondary flow, drawn in and accelerated by the fan (6), being channeled through a secondary duct (8) installed in the nacelle (1) between the inner surface of said nacelle (1) and the outer surface of the turbojet (3), towards a fan nozzle (9),
**characterized in that** the nacelle also incorporates:
- a fixed part supported by a half nacelle (lint) defined by a vertical plane of symmetry of the nacelle, and
- a moving part (20) supported by the other half nacelle (lext), said moving part containing or releasing a portion of the secondary flow, depending on the moving part's open or closed position, said moving part being capable of adopting only a discrete number of positions, greater than or equal to three positions, determining in particular a closed position, a completely open position, and one or more intermediate positions known as half open positions, the shape of the moving part being adapted such that its effective exit area is narrower than that of the fixed half nacelle (lint) when the moving part (20) is closed,
its effective exit area is approximately equal to that of the fixed half nacelle (lint) when the moving part (20) is half open, and
is wider when the moving part (20) is completely open.

2. Power plant according to Claim 1, wherein the moving part is a deployable cowl located inside the secondary duct (8), in the rear section of the latter, appreciably facing the fan nozzle (9), said deployable cowl being mobile in translation parallel to the longitudinal axis X of the turbojet (3), the nacelle having openings in the rear section such that this deployable cowl is capable of uncovering or covering these openings.

3. Power plant according to Claim 2, wherein the deployable cowl is an element in the shape of a nacelle ring segment.

4. Power plant according to either of Claims 2 and 3, wherein the deployable cowl merges with the inner surface (10) of the secondary duct (8) in its closed position and constitutes an extension of this surface towards the rear in its open position.

5. Power plant according to Claim 1, wherein the moving part is a pivoting element located on the outer surface of the secondary duct (8), at the rear section of the latter, the nacelle incorporating through openings made in the turbojet nacelle such that this pivoting element is capable, depending on its open or closed position, of uncovering or covering these openings.

6. Aircraft, **characterized in that** it incorporates a power plant according to any one of Claims 1 to 5.
